# EUROPEAN PATENT APPLICATION

(11) **EP 4 156 054 A1**
(43) Date of publication of application: **29.03.2023**
(21) Application number: 22196701.1
(22) Date of filing: 20.09.2022
(51) Int. Cl.: G06Q 10/083, G01C 21/34, G08G 1/0968, G08G 1/00, G05D 1/02

(54) **METHOD FOR AUTOMATIC DRIVING TRANSPORTATION, STORAGE MEDIUM AND PROGRAM PRODUCT**

(30) Priority: 23.09.2021 CN 202111115323
(71) Applicant: Beijing Tusen Zhitu Technology Co., Ltd., Beijing 100016 (CN)
(72) Inventor: SUN, Jiaxin, Beijing 100016 (CN); WU, Nan, Beijing 100016 (CN)
(74) Representative: Murgitroyd & Company

(57) **Abstract**

The present application provides a method for automatic driving transportation, a storage medium and a computer program product. The method comprises: acquiring a freight sub-order; determining target transport capacity and a target route meeting demands of the freight sub-order; sending the target route to a first server; receiving a result of a first risk assessment of the target route from the first server; and instructing, in response to the result of the first risk assessment being a first assessment result, the target transport capacity to execute transportation task according to the target route. The method can effectively ensure the flexibility of transport capacity and time of transportation, reduce unloading rate of transport capacity, save human and material resources, and improve the transportation efficiency and the safety.

## Description

The present disclosure claims priority to Chinese Patent Application No. 202111115323.1, titled "METHOD AND APPARATUS FOR AUTOMATIC DRIVING TRANSPORTATION, TRANSPORTATION SYSTEM AND STORAGE MEDIUM", filed on September 23, 2021, the content of which is incorporated herein by reference in its entirety.

### TECHNICAL FIELD

The present application relates to the technical field of logistics, and specifically to a method for automatic driving transportation, a storage medium and a program product.

### BACKGROUND

There are many problems in the current "warehouse-to-warehouse" transportation manner of arterial highway logistics, including but not limited to: long loading and unloading time; demands of human drivers for diets, rests and the like in long-distance transportation; factors such as poor driving skills and fatigue driving that may easily cause danger; and poor tolerance and resistance against disasters, for example, in a sudden public event such as an epidemic, drivers may be susceptible and more likely to be quarantined for long time every time when they complete a cross-regional freight transportation.

The current automatic driving transportation manner for arterial logistics can effectively solve the problems existing in the current transportation mode. For example, the transportation efficiency can be greatly improved since the time is fully used except for refueling and preparation; transportation routes and driving policies are continuously optimized on the basis of artificial intelligence and big data, fully taking the advantage of the excellent driving performance of electronic drivers; dangers due to insufficient driving experience, fatigue driving or huge mood fluctuation of human drivers can be avoided, thus improving driving safety. The labor cost and the human resource management cost can be optimized, and fuel consumption cost and the like are reduced. By automatic driving transportation, the problem of blocked material resource circulation caused by lockdown due to epidemics and other reasons can be effectively solved, and the risk of spreading of the epidemics caused by round-trips of drivers is effectively avoided. However, a single-vehicle transportation mode still cannot exert the advantages of large-scale transportation mainly because of dispersion of freight spaces and complicated environments, leading to an obvious long tail effect.

Therefore, the current automatic driving transportation manner for arterial logistics has the problem of low transportation efficiency.

### SUMMARY

On this basis, it is necessary to provide a method and apparatus for automatic driving transportation, a transportation system and a storage medium for reconstructing a multi-point transportation mode into a circulating drop-and-pick transportation mode, so as to preliminarily improve the transportation efficiency and predict possible risk before a transportation task is started, thereby further improving the transportation efficiency.

In a first aspect, the present application provides a method for automatic driving transportation, comprising:
acquiring a freight sub-order;
determining target transport capacity and a target route meeting demands of the freight sub-order;
sending the target route to a first server such that the first server returns a result of a first risk assessment of the target route; and
in response to the result of the first risk assessment being a first assessment result, instructing the target transport capacity to execute the transportation task according to the target route.

In a second aspect, the present application provides a method for automatic driving transportation, comprising:
receiving a target route sent by a third server, wherein the target route is a target route meeting demands of a freight sub-order;
performing a first risk assessment according to the target route; and
sending a result of the first risk assessment to the third server, wherein the result of the first risk assessment comprises a first assessment result, and the first assessment result is used for prompting the third server to instruct target transport capacity meeting demands of the freight sub-order to execute the transportation task according to the target route passing the assessment.

In some embodiments of the present application, performing a first risk assessment according to the target route comprises: determining a fourth server according to a passing area corresponding to the target route; acquiring an event analysis result in the passing area through the fourth server; and obtaining the result of the first risk assessment according to the event analysis result.

In some embodiments of the present application, the result of the first risk assessment further comprises a second assessment result, and the method for automatic driving transportation further comprises: receiving an updated target route sent by the third server, wherein the updated target route is obtained by the third server updating the target route in response to the second assessment result; performing a second risk assessment according to the updated target route to obtain a result of the second risk assessment; and sending the result of the second risk assessment to the third server.

In some embodiments of the present application, the method for automatic driving transportation further comprises: in response to abnormality information of an on-board unit of the target transport capacity, sending the abnormality information to the fourth server, wherein the abnormality information is used for prompting the fourth server to instruct an edge computing unit to analyze and acquire a path guide information and/or a passing control information and return the path guide information and/or the passing control information to the on-board unit through a road side unit; the abnormality information comprises at least one of software/hardware abnormality information, map abnormality information, sensing abnormality information, planning abnormality information and driving scene abnormality information; the path guide information and/or the passing control information are used for the target transport capacity adjusting the abnormality.

In some embodiments of the present application, the method for automatic driving transportation further comprises: in response to the result of the first risk assessment being the first assessment result, acquiring driving scene abnormality information currently in use and map information currently in use; acquiring a real-time driving scene information through a fifth server, and acquiring a real-time map information through an on-board unit of the target transport capacity, wherein the real-time driving scene information is determined by the fifth server according to meteorological information and road administration information returned by the fourth server and road side information returned by an edge computing unit; comparing the driving scene information currently in use with the real-time driving scene information to obtain a first result; comparing the map information currently in use with the real-time map information to obtain a second result; and updating the driving scene information currently in use and/or the map information currently in use according to the first result and/or the second result, and respectively uploading the updated driving scene information and/or the updated map information to the fourth server and/or the on-board unit.

In some embodiments of the present application, the method for automatic driving transportation further comprises: in response to the result of the first risk assessment being the first assessment result, acquiring an instruction of transport capacity information verification, wherein the instruction of transport capacity information verification comprises at least one of an instruction of identity information verification, an instruction of position information verification, an instruction of motion information verification and an instruction of driving state information verification; sending the instruction of transport capacity information verification to a target road side unit, so as to perform transport capacity information verification according to information to be verified returned by the target road side unit, to obtain a result of the transport capacity information verification; and maintaining a white list of transport capacity according to the result of the transport capacity information verification, wherein the white list of transport capacity contains all identity-verified transport capacity.

In some embodiments of the present application, the method for automatic driving transportation further comprises: in response to station arrival information and freight transportation information of an on-board unit, acquiring pending-payment information according to the freight transportation information; sending the pending-payment information to the on-board unit through the target road side unit; and in response to completed-payment information returned by the on-board unit of the target transport capacity, generating and returning an unloading instruction to instruct the on-board unit to perform an unloading operation on first semi-trailer transport capacity.

In some embodiments of the present application, the method for automatic driving transportation further comprises: in response to the station arrival information of the on-board unit, determining a station type contained in the station arrival information; in response to no abnormality being in the result of the transport capacity information verification and the station type being not an end station, generating a loading instruction; and sending the loading instruction to the on-board unit, wherein the loading instruction is used for instructing the on-board unit to perform a loading operation on second semi-trailer transport capacity.

In a third aspect, the present application provides an apparatus for automatic driving transportation, comprising:
a first acquisition module configured for acquiring a freight sub-order;
a first determining module configured for determining target transport capacity and a target route which meet demands of the freight sub-order;
a first sending module configured for sending the target route to a first server such that the first server returns a result of a first risk assessment of the target route; and
a first response module configured for, in response to the result of the first risk assessment being a first assessment result, instructing the target transport capacity to execute the transportation task according to the target route.

In a fourth aspect, the present application provides an apparatus for automatic driving transportation, comprising:
a first receiving module configured for receiving a target route sent by a third server, wherein the target route is a target route meeting demands of a freight sub-order;
a second acquisition module configured for performing first risk assessment according to the target route; and
a second sending module configured for sending a result of the first risk assessment to the third server, wherein the result of the first risk assessment comprises a first assessment result, and the first assessment result is used for prompting the third server to instruct target transport capacity meeting demands of the freight sub-order to execute the transportation task according to the target route passing the assessment.

In a fifth aspect, the present application provides a transportation system, comprising:
a server, a network connection unit and automatic driving traction capacity, wherein
the server comprises a first server, a second server and a third server; the network connection unit comprises an on-board unit; the on-board unit is arranged in the automatic driving traction capacity;
the first server is in communicative connection with the second server and the third server; the second server is in communicative connection with the third server; the on-board unit is in communicative connection with the first server and the third server;
the third server is configured for acquiring a freight sub-order through the second server; determining target transport capacity and a target route meeting demands of the freight sub-order; then sending the target route to the first server; and after a result of a first risk assessment of the target route returned by the first server is obtained, in response to the result of the first risk assessment being a first assessment result, instructing the target transport capacity to execute the transportation task according to the target route;
wherein the target transport capacity comprises the automatic driving traction capacity.

In a sixth aspect, the present application further provides a computer-readable storage medium having a computer program stored thereon, wherein the computer program is loaded by a processor to implement the steps of the method for automatic driving transportation.

In a seventh aspect, the embodiments of the present application provide a computer program product or a computer program, wherein the computer program product or the computer program comprises a computer instruction stored in a computer-readable storage medium. A processor of a computer device reads the computer instruction from the computer-readable storage medium and executes the computer instruction, causing the computer device to implement the method provided in the first aspect or the second aspect.

In the method and apparatus for automatic driving transportation, the transportation system and the storage medium described above, the third server acquires a freight sub-order, determines target transport capacity and a target route meeting demands of the freight sub-order, so as to send the target route to a first server, such that the first server returns a result of a first risk assessment of the target route, and in response to the result of the first risk assessment being a first assessment result, instructs the target transport capacity to execute the transportation task according to the target route. By receiving the target route sent by the third server, the first server performs the first risk assessment according to the target route, sends the result of the first risk assessment to the third server, and thus instructs, when the result of the first risk assessment is passing, target transport capacity meeting demands of the freight sub-order to execute the transportation task according to the target route passing the assessment. The method can effectively ensure the flexibility of transport capacity and time of transportation, reduce unloading rate of transport capacity, save human and material resources, and improve the transportation efficiency and the safety.

### BRIEF DESCRIPTION OF THE DRAWINGS

In order to more clearly illustrate the technical schemes in the embodiments of the present application, the drawings required for use in the embodiments will be briefly described below. It is obvious that the drawings in the description below are only some embodiments of the present application, and other drawings can be derived from these drawings by those skilled in the art without making creative efforts.
FIG. 1 illustrates a schematic architecture of the transportation system according to the embodiments of the present application;
FIG. 2 illustrates a schematic scene of the method for automatic driving transportation according to the embodiments of the present application;
FIG. 3 illustrates a schematic flow of the method for automatic driving transportation according to the embodiments of the present application;
FIG. 4 illustrates an architectural application of the transportation system according to an embodiment of the present application;
FIG. 5 illustrates another schematic flow of the method for automatic driving transportation according to the embodiments of the present application;
FIG. 6 illustrates another schematic scene of the method for automatic driving transportation according to the embodiments of the present application;
FIG. 7 illustrates a schematic overall flow of the method for automatic driving transportation according to the embodiments of the present application;
FIG. 8 illustrates a schematic scene I of the method for automatic driving transportation according to the embodiments of the present application;
FIG. 9 illustrates a schematic scene II of the method for automatic driving transportation according to the embodiments of the present application;
FIG. 10 illustrates a schematic scene III of the method for automatic driving transportation according to the embodiments of the present application;
FIG. 11 illustrates a schematic scene IV of the method for automatic driving transportation according to the embodiments of the present application;
FIG. 12 illustrates a schematic scene V of the method for automatic driving transportation according to the embodiments of the present application;
FIG. 13 illustrates a schematic scene VI of the method for automatic driving transportation according to the embodiments of the present application;
FIG. 14 illustrates a schematic scene VII of the method for automatic driving transportation according to the embodiments of the present application;
FIG. 15 illustrates a schematic structure of the apparatus for automatic driving transportation according to the embodiments of the present application;
FIG. 16 illustrates a schematic structure of the apparatus for automatic driving transportation according to the embodiments of the present application;
FIG. 17 illustrates a schematic structure of the computer device according to the embodiments of the present application.

### DETAILED DESCRIPTION

The technical schemes in the embodiments of the present application will be clearly and completely described below with reference to the drawings in the embodiments of the present application. Obviously, the described embodiments are only a part of the embodiments of the present application, rather than all the embodiments. Based on the embodiments in present application, all other embodiments obtained by those skilled in the art without making creative efforts shall fall within the protection scope of the present application.

In the description of the present application, the terms "first" and "second" are only for the purpose of description, and may not be construed as indicating or implying the relative importance or implicitly specifying the number of technical features indicated. Thus, features defined by "first" and "second" may explicitly or implicitly include one or more of the feature. In the description of the present application, "plurality" means two or more, unless otherwise specifically defined.

In the description of the present application, the term "for example" is used to denote "as an example, illustration, or explanation". Any embodiment described in the present application as "for example" is not necessarily to be construed as more preferred or advantageous to other embodiments. The following description is presented to enable any person skilled in the art to implement and use the present invention. In the following description, details are set forth for the purpose of explanation. It will be understood by those of ordinary skill in the art that the present invention may be implemented without the use of these specific details. In other examples, well-known structures and processes will not be described in detail so as not to obscure the description of the present invention with unnecessary details. Thus, the present invention is not limited to the embodiments shown, but is consistent with the widest scope of the principles and features disclosed in the present application.

Embodiments of the present application provide a method and apparatus for automatic driving transportation, a transportation system and a storage medium, which will be separately described in detail below.

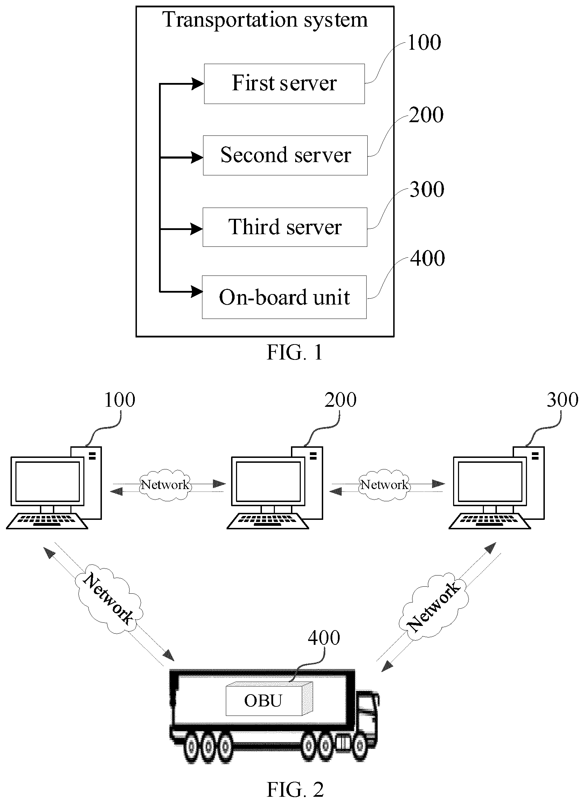

Referring to FIG. 1, FIG. 1 is a schematic structural diagram of the transportation system disclosed herein, comprising a server, a network connection unit and automatic driving traction capacity. The server comprises a first server 100, a second server 200 and a third server 300. The network connection unit comprises an on-board unit 400. The on-board unit 400 is arranged in the automatic driving traction capacity;

The first server 100 is in communicative connection with the second server 200 and the third server 300. The second server 200 is in communicative connection with the third server 300. The on-board unit 400 is in communicative connection with the first server 100 and the third server 300.

The third server 300 is configured for acquiring a freight sub-order through the second server 200; determining target transport capacity and a target route meeting demands of the freight sub-order; then sending the target route to the first server 100; and after a result of a first risk assessment of the target route returned by the first server 100 is obtained, in response to the result of the first risk assessment being a first assessment result, instructing the target transport capacity to execute the transportation task according to the target route.

The target transport capacity comprises the automatic driving traction capacity.

Specifically, the first server 100, the second server 200 and the third server 300 may be independent servers, or may be server networks or server clusters integrated in a total server, including but not limited to: a computer, a network host, a single network server, a plurality of network server sets, or a cloud server composed of a plurality of servers. The cloud server is composed of a large number of computers or network servers based on cloud computing; and networks include, but are not limited to: a wide area network, a metropolitan area network, or a local area network.

Specifically, the on-board unit (OBU) 400 may be a device comprising receiving and transmitting hardware, i.e., a device having receiving and transmitting hardware capable of conducting bidirectional communication on a bidirectional communication link. Such device may include a cellular device or other communication devices provided with a single line display or a multi-line display, or a cellular or other communication device without a multi-line display. The OBU 400 may be a microwave device that communicates with a road side unit (RSU) using dedicated short range communication (DSRC) technology.

Specifically, the automatic driving traction capacity may be an operating vehicle in the road transport industry, including but not limited to: (1) by loading capacity: a micro vehicle (loading capacity ≤ 1.8 tons), a light vehicle (loading capacity > 1.8 tons and ≤ 6 tons), a medium vehicle (loading capacity > 6 tons and ≤ 14 tons) and a heavy vehicle (loading capacity ≥ 14 tons); (2) divided by uses: an open (flatbed) vehicle and a closed (van) vehicle; (3) a full-trailer tractor and a semi-trailer tractor.

The transportation system described above can be applied to a scene as shown in FIG. 2. However, it will be appreciated by those skilled in the art that the application scene shown in FIG. 2 is only one application scene of the scheme of the present application, and does not constitute a limitation to the application scenes of the scheme of the present application; and other application circumstance may include more or fewer computer devices than those shown in FIG. 1. For example, as for the three servers shown in FIG. 1, it will be appreciated that the transportation system may further comprises one or more other servers, or one or more other units, which are not defined herein. Those ordinarily skilled in the art will appreciate that with the evolution of the transportation system and the presence of new business scenes, the technical schemes provided in the embodiments of the present invention are also applicable to solving similar technical problems.

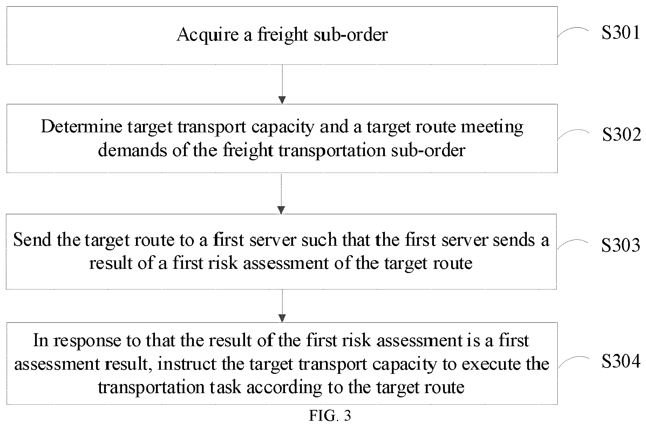

In one embodiment, referring to FIG. 3, the present application provides a method for automatic driving transportation, which is mainly illustrated as being applied to the third server 300 in FIG. 2. The method comprises step S301 to step S304, specifically as follows:

S301, acquiring a freight sub-order.

In a specific implementation, the freight sub-order may be a separated and recombined freight order information in a logistics scene, and the freight order information may contain cargo parameter information, logistics time limit, and other information. The cargo parameter information can be cargo dimension information and/or cargo weight information; the logistics time limit can be a permitted arrival time. For example, the logistics time limit may be from 00:00, Jan. 1, 2021 to 00:00, Jan. 5, 2021; for another example, the cargo dimension information may be length XX, width XX and height XX, and the cargo weight information may be XX kilograms (kg) or XX grams (g).

In one embodiment, the step comprises: receiving a freight demand order sent by a second server; and processing the freight demand order based on a preset transportation policy to obtain the freight sub-order.

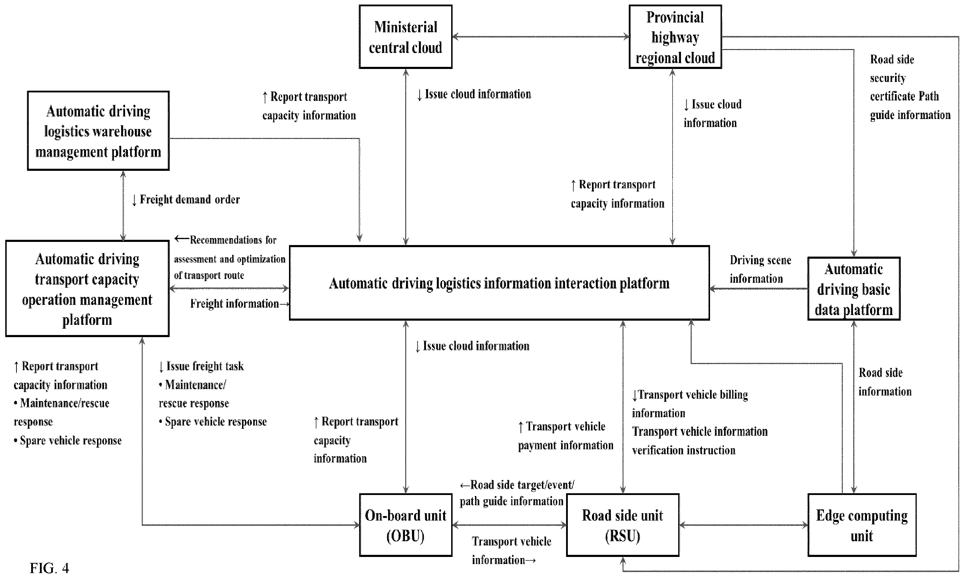

Referring to FIG. 4, FIG. 4 is an architectural application diagram of the transportation system according to embodiments of the present application. The second server 200 may be an automatic driving logistics warehouse management platform in FIG. 4, and is configured to interface with the third server 300 (an automatic driving transport capacity operation management platform) and issue the freight demand order to the third server 300. Certainly, the second server 200 may also be configured to perform other operations, which will be described below.

In a specific implementation, the third server 300 may receive the freight demand order sent by the second server 200, and separate and recombine on the freight demand order according to the preset transportation policy, so as to acquire an analysis basis, i.e., a freight sub-order, for subsequently executing the automatic driving transportation task.

It should be noted that the separation and recombination of the freight demand order proposed herein and appropriate transport capacity such as a tractor used to execute the automatic driving transportation task are intended to form a drop-and-pick transportation cycle in a multi-point transportation demand. The transformation of transportation manner can greatly guarantee the flexibility of transport capacity and transport time, thus supporting diversified order integration and separation, greatly improving the transportation efficiency, reducing the unloading rate, and improving the freight income. The tractor refers to a common truck or semi-trailer manner in which the truck head and the trailer are connected by tools therebetween. The truck head can be separated from the original trailer to haul other trailers, and the trailer can also be separated from the original truck head and be hauled by other truck heads.

S302, determining target transport capacity and a target route meeting demands of the freight sub-order.

The target transport capacity can be a ready-to-use transport device determined by analysis, such as a tractor, a semi-trailer or a full-trailer. The target route may be a ground transportation route containing a starting site address, an arrival site address, and/or service areas on the way and security checkpoints on the way. Certainly, if the method for automatic driving transportation provided by the embodiments of the present application is applied to waterway transportation, the target transport capacity may be a ship of a specified type, and the target route may be a transportation waterway.

In a specific implementation, the third server 300 is pre-configured to interface with the second server 200 and respond to the freight demand order sent by the second server 200, including but not limited to: (1) intelligently allocating transport capacity according to demands of the freight demand order for start and end locations of transportation, timeliness and the like; (2) conducting refined scheduling on transport capacity team; and (3) intelligently planning a single-way or multi-way route.

Specifically, each freight sub-order expresses freight transportation demands through the order information, and the separation of freight demand order proposed herein is to subdivide the demands to obtain the target transport capacity and the target route which meet the demands of each freight sub-order, thereby greatly improving the automatic driving transportation efficiency. Specifically, the third server 300 may analyze the demands of each freight sub-order in terms of cargo volume, vehicle volume, cargo weight, logistics time limit, freight transportation difficulty, and the like, and determine the target transport capacity and target route.

S303, sending the target route to a first server such that the first server returns a result of a first risk assessment of the target route.

Referring to FIG. 4, the first server 100 may be an automatic driving logistics information interaction platform in FIG. 4, and is configured to interface with the third server 300 (automatic driving transport capacity operation management platform) to assess and optimize an intelligent drop-and-pick transport route. Certainly, the first server 100 may also be configured to perform other operations, which will be described below.

In a specific implementation, after the third server 300 acquires the target transport capacity and the target routes that meet the demands of each freight sub-order, the first server 100 is configured to assess and optimize the target route in the embodiments of the present application. Therefore, the third server 300 needs to send the target route to the first server 100 such that the first server 100 performs a first risk assessment operation to determine whether the current target route is available, and returns the result of the first risk assessment of the target route. Execution steps of the first risk assessment operation in this embodiment will be described in detail below.

S304, in response to the result of the first risk assessment being a first assessment result, instructing the target transport capacity to execute the transportation task according to the target route.

The first assessment result may be passing, and the second assessment result may be failure.

In a specific implementation, after the third server 300 acquires the result of the first risk assessment returned by the first server 100, if the result is the first assessment result, the third server 300 may instruct, in response to the result of the first risk assessment being the first assessment result, the target transport capacity determined in the preceding step to execute the transportation task according to the correspondingly determined target route.

In one embodiment, step S304, in response to the result of the first risk assessment being a first assessment result, instructing the target transport capacity to execute the transportation task according to the target route comprises: in response to the result of the first risk assessment being the first assessment result, generating a transportation instruction containing freight transportation information; and sending the transportation instruction to a first on-board unit to instruct the target transport capacity to execute the transportation task according to the target route. The first assessment result indicates that the target route passes the first risk assessment; the target transport capacity can execute the transportation task according to the target route; and the first on-board unit is an on-board unit arranged in the target transport capacity.

In a specific implementation, if the third server 300 receives the result of the first risk assessment returned by the first server 100 and determines that the result is the first assessment result, the third server may first generate a transportation instruction containing freight transportation information in response to this result. The freight transportation information is from the on-board unit 400 on the target transport capacity. In order to instruct the target transport capacity to execute the transportation task according to the target route, the third server 300 may send the transportation instruction to the first on-board unit in the target transport capacity after generating the transportation instruction.

In one embodiment, the method for automatic driving transportation described above further comprises: in response to the result of the first risk assessment being a second assessment result, updating the target route to obtain an updated target route; acquiring a result of a second risk assessment of the updated target route; and in response to the result of the second risk assessment being the first assessment result, instructing the target transport capacity to execute the transportation task according to the updated target route.

In a specific implementation, if the third server 300 receives the result of the first risk assessment returned by the first server 100 and determines that the result is the second assessment result, it indicates that the assessment object (the target route) at this time is unavailable, and the target route needs to be updated. Thus a secondary assessment is performed on the target route through the first server 100 until the risk assessment result corresponding to the route is the first assessment result, and the third server then instructs the target transport capacity to execute the transportation task according to the updated target route passing the assessment.

In one embodiment, step described above, in response to the result of the second risk assessment being the first assessment result, instructing the target transport capacity to execute the transportation task according to the updated target route, comprises: in response to the result of the second risk assessment being the first assessment result, generating a transportation instruction containing freight transportation information; and sending the transportation instruction to a first on-board unit to instruct the target transport capacity to execute the transportation task according to the updated target route, wherein the first on-board unit is arranged in the target transport capacity.

In a specific implementation, in this embodiment, the procedures in response to the result of the second risk assessment being the first assessment result are similar to the procedures in response to the result of the first risk assessment being the first assessment result, and are not repeated here.

In one embodiment, the method for automatic driving transportation further described herein comprises: in response to a request for spare transport capacity of the first on-board unit, selecting spare transport capacity for replacing the target transport capacity from a white list of transport capacity, wherein the white list of transport capacity contains all identity-verified transport capacity; and sending the transportation instruction to a second on-board unit to instruct the spare transport capacity to execute the transportation task according to the target route or the updated target route, wherein the second on-board unit is arranged in the spare transport capacity.

In a specific implementation, the third server 300 is further configured to send a freight transportation task information to the on-board unit 400, and respond to the request for spare transport capacity from the on-board unit 400. Therefore, on the basis of the above-mentioned embodiments, when the target transport capacity determined by the third server 300 is transport capacity with a first on-board unit, the third server 300 may further select spare transport capacity for replacing the target transport capacity from the pre-stored white list of transport capacity in response to the request for spare transport capacity of the first on-board unit, and then send to the spare transport capacity the transportation instruction that is originally sent to the target transport capacity, so that the spare transport capacity replaces the target transport capacity to execute the transportation task.

It should be noted that the white list of transport capacity mentioned in the embodiments of the present application is controlled by the third server 300, and the third server 300 may interface with the first server 100 and request for the white list of transport capacity through the first server 100, or perform operations such as registration, login, or logout on a certain on-board unit. The first server 100 mainly verifies the transport capacity requesting for addition to the white list of transport capacity, and adds the transport capacity passing the verification to the white list of transport capacity for receive automatic driving transportation tasks.

In one embodiment, the method for automatic driving transportation described above further comprises: in response to station arrival information of the first on-board unit or the second on-board unit, determining a station type contained in the station arrival information; in response to the station type being an end station, acquiring transport capacity self-inspection information, mileage information and load information; and processing the white list of transport capacity according to the transport capacity self-inspection information, the mileage information and the load information.

In a specific implementation, the third server 300 is further configured to assess whether current transport capacity executing the transportation task needs examination and repair in combination with the transport capacity self-inspection information, the mileage information and the load information. Specifically, the assessment operation described in the embodiments starts when the station arrival information sent from the first on-board unit or the second on-board unit is an end station. The examination and repair of transport capacity is an effective means for ensuring that the transport efficiency is not affected. If it is determined that the current transport capacity needs examination and repair, the transport capacity is removed from the current white list of transport capacity, so as to avoid allocation of other transportation tasks to the transport capacity.

In one embodiment, the step described above, processing the white list of transport capacity according to the transport capacity self-inspection information, the mileage information and the load information comprises: acquiring a maintenance assessment result of transport capacity currently executing the transportation task according to the transport capacity self-inspection information, the mileage information and the load information; in response to the maintenance assessment result being a first maintenance result, eliminating transport capacity identity information of the transport capacity in the white list of transport capacity; and in response to the maintenance assessment result being a second maintenance result, retaining the transport capacity identity information of the transport capacity in the white list of transport capacity.

The first maintenance result may be a result indicating an examination and repair; the second maintenance result may be a result indicating no examination or repair.

In a specific implementation, the third server 300 analyzes the transport capacity self-inspection information, the mileage information and the load information of the current transport capacity; if the assessment determines that the current transport capacity needs examination and repair, the third server can remove the transport capacity identity information of the transport capacity, such as a vehicle number and/or a license plate number, recorded in the white list of transport capacity in response to the first maintenance result. If the assessment determines that the current transport capacity does not need examination and repair, the third server will not process the white list of transport capacity in response to the second maintenance result.

It should be noted that the third server 300 may determine the current transport capacity that executes the transportation task by querying the transport capacity equipment number and/or the license plate number bound to the freight sub-order. Since an on-board unit is provided in each vehicle of transport capacity, the third server 300 may further query a unit number bound to the transport capacity number and/or the license plate number to be queried, and determine the on-board unit of the current transport capacity that executes the transportation task. The transport capacity number and/or the license plate number bound to the freight sub-order can be recorded when the target transport capacity is determined.

In the method for automatic driving transportation according to the above embodiments, the third server acquires a freight sub-order, determines target transport capacity and a target route meeting demands of the freight sub-order, so as to send the target route to a first server, such that the first server returns a result of a first risk assessment of the target route, and in response to the result of the first risk assessment being a first assessment result, instructs the target transport capacity to execute the transportation task according to the target route. In this way, the transportation task is executed in a multi-site transportation mode, and the risk assessment is performed before the transportation task is started, thus effectively ensuring the flexibility of transport capacity and time of transportation, reduce unloading rate of transport capacity, save human and material resources, and improve the transportation efficiency and the safety.

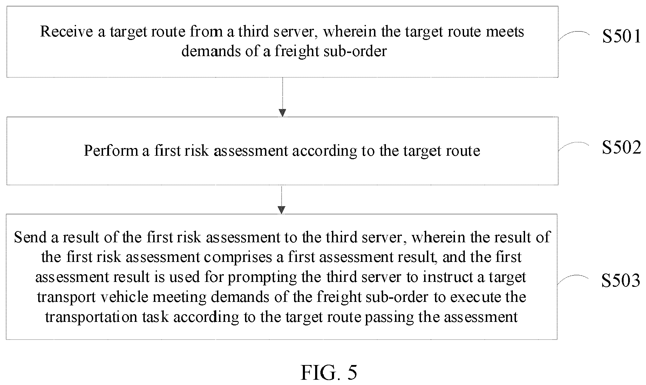

In one embodiment, referring to FIG. 5, the present application provides another method for automatic driving transportation, which is mainly illustrated as being applied to the first server 100 in FIG. 2. The method comprises step S501 to step S503, specifically as follows:
S501, receiving a target route sent by a third server, wherein the target route is a target route meeting demands of a freight sub-order;
S502, performing a first risk assessment according to the target route; and
S503, sending a result of the first risk assessment to the third server, wherein the result of the first risk assessment comprises a first assessment result, and the first assessment result is used for prompting the third server to instruct target transport capacity meeting demands of the freight sub-order to execute the transportation task according to the target route passing the assessment.

In a specific implementation, referring to FIG. 4, the first server 100 may be an automatic driving logistics information interaction platform, and the third server 300 may be an automatic driving transport capacity operation management platform. After receiving route information sent by the third server 300, the first server 100 may take a route corresponding to the route information as the target route, perform the first risk assessment on the target route which mainly assesses whether the route has a risk of reducing the transportation efficiency, and further return the result of the first risk assessment to the third server 300, allowing the third server to performs different operation according to different types of result.

In one embodiment, step S502, performing a first risk assessment according to the target route comprises: determining a fourth server according to a passing area corresponding to the target route; acquiring an event analysis result in the passing area through the fourth server; and obtaining the result of the first risk assessment according to the event analysis result.

Referring to FIG. 4, the fourth server may be a ministerial central cloud or a provincial highway regional cloud.

In a specific implementation, different passing areas may be managed by different cloud platforms. For example, the ministerial central cloud may manage all areas, and the provincial highway regional cloud may manage provincial highways. Specifically, the fourth server is configured to analyze abnormal traffic events in the corresponding passing area and return an event analysis result to the first server, such that the first server obtains the result of the first risk assessment accordingly.

Specifically, the abnormal traffic event may be an abnormal event occurring during the freight transportation, including but not limited to the following: wet and slippery road, icy road, damaged road facility, fire, bad weather, transport capacity driving in reverse, abnormal stop of transport capacity, traffic accidents and the like.

In one embodiment, the result of the first risk assessment further comprises a second assessment result, and the method for automatic driving transportation described above further comprises: receiving an updated target route sent by the third server, wherein the updated target route is obtained by the third server updating the target route in response to the second assessment result; performing a second risk assessment according to the updated target route to obtain a result of the second risk assessment; and sending the result of the second risk assessment to the third server.

In a specific implementation, the procedures of the first server 100 performing risk assessment on the updated target route are similar to the procedures of the first server 100 performing risk assessment on the target route, which have been described in detail in the foregoing embodiments, and are thus not repeated in this embodiment.

In one embodiment, the method for automatic driving transportation described above further comprises: in response to abnormality information of an on-board unit of the target transport capacity, sending the abnormality information to the fourth server, wherein the abnormality information is used for prompting the fourth server to instruct an edge computing unit to analyze and acquire a path guide information and/or a passing control information and return the path guide information and/or the passing control information to the on-board unit through a road side unit; the abnormality information comprises at least one of software/hardware abnormality information, map abnormality information, sensing abnormality information, planning abnormality information and driving scene abnormality information; the path guide information and/or the passing control information are used for the target transport capacity adjusting the abnormality.

Specifically, the abnormality information may be: (1) software/hardware abnormality information: the software and hardware of an automatic driving system of the transport capacity fail, such that the system cannot operate normally; (2) map abnormality information: road information provided by a high-precision map is inconsistent with an actual road structure, such that the automatic driving system of the transport capacity makes wrong planning, and a safety risk such as a crash is about to occur; (3) sensing abnormality information: under the condition of extreme weather, a sensor cannot work normally, and the automatic driving system of the transport capacity cannot acquire surrounding driving scene information; (4) planning abnormality information: scene information sensed by a sensing module of the transport capacity is wrong, such that the automatic driving system of the transport capacity makes wrong planning, and a safety risk such as a crash is about to occur; and (5) driving scene abnormality information: a current scene is not within a designed operation range of the automatic driving system, such that the automatic driving system of the transport capacity cannot cope with the current scene and other conditions.

Specifically, the abnormalities of the target transport capacity may be adjusted by at least two ways: after analyzing the received path guide information and/or passing control information, the on-board unit directly controls corresponding components of the target transport capacity to adjust the abnormalities; or, the on-board unit sends an abnormality adjustment instruction to a control unit of the target transport capacity, such that the control unit controls the corresponding components of the target transport capacity to adjust the abnormalities.

The edge computing unit may be arranged in any one of the above servers or an independent edge server. The edge computing unit is configured to send a road side target, the abnormal traffic event, and the path guide information and the passing control information sent by the fourth server to a road side unit. The road side unit may be arranged on two sides of a road in an actual application scene and configured to receive the path guide information and/or the passing control information of the edge computing unit and send the information to the on-board unit.

In a specific implementation, the first server 100 may monitor in real time the abnormalities of the target transport capacity and the on-board unit according to the abnormality information uploaded by the on-board unit, and detect an abnormal traffic event according to the road side information, so as to send the detected abnormal traffic event to the fourth server, and the fourth server selectively sends the path guide information or the passing control information to avoid the abnormality.

In one embodiment, the method for automatic driving transportation described above further comprises: in response to the result of the first risk assessment being the first assessment result, acquiring driving scene abnormality information currently in use and map information currently in use; acquiring a real-time driving scene information through a fifth server, and acquiring a real-time map information through an on-board unit of the target transport capacity, wherein the real-time driving scene information is determined by the fifth server according to meteorological information and road administration information returned by the fourth server and road side information returned by an edge computing unit; comparing the driving scene information currently in use with the real-time driving scene information to obtain a first result; comparing the map information currently in use with the real-time map information to obtain a second result; and updating the driving scene information currently in use and/or the map information currently in use according to the first result and/or the second result, and respectively uploading the updated driving scene information and/or the updated map information to the fourth server and/or the on-board unit.

Referring to FIG. 4, the fifth server may be an automatic driving basic data platform, and is configured to interface with the fourth server to acquire meteorological information and road administration information, and/or interface with the edge computing unit to acquire road side information including traffic participant information, traffic signs, traffic events, traffic lights and the like, and/or to generate, according to the meteorological information, the road administration information and the road side information, driving scene information, and push the driving scene information to the first server.

In a specific implementation, the first server 100 may compare the driving scene information currently in use of the target transport capacity with real-time driving scene information in response to the result of the first risk assessment being the first assessment result, or may compare the map information currently in use of the target transport capacity with real-time map information. If a comparison result indicates information inconsistency, the driving scene information currently in use and/or the map information currently in use may be updated, and the updated driving scene information and/or the updated map information are uploaded to the fourth server and/or the on-board unit respectively, so that the occurrence frequency of the abnormalities is reduced, and the improvement of the transportation efficiency is ensured.

In one embodiment, the method for automatic driving transportation described above further comprises: in response to the result of the first risk assessment being the first assessment result, acquiring an instruction of transport capacity information verification, wherein the instruction of transport capacity information verification comprises at least one of an instruction of identity information verification, an instruction of position information verification, an instruction of motion information verification and an instruction of driving state information verification; sending the instruction of transport capacity information verification to a target road side unit, so as to perform transport capacity information verification according to information to be verified returned by the target road side unit, to obtain a result of the transport capacity information verification; and maintaining a white list of transport capacity according to the result of the transport capacity information verification, wherein the white list of transport capacity contains all identity-verified transport capacity.

In a specific implementation, the road side unit is further configured to receive the instruction of transport capacity information verification from the first server and upload vehicle information acquired in a wireless communication manner as information to be verified, such that the information to be verified is subjected to a targeted verification to obtain a result of the transport capacity information, thus achieving maintenance of the white list of transport capacity. Therefore, if the effectiveness of the information recorded in the white list of transport capacity is accurate enough, the transportation efficiency can be effectively improved.

In one embodiment, the method for automatic driving transportation described above further comprises: in response to station arrival information and freight transportation information of an on-board unit, acquiring pending-payment information according to the freight transportation information; sending the pending-payment information to the on-board unit through the target road side unit; and in response to completed-payment information returned by the on-board unit of the target transport capacity, generating and returning an unloading instruction to instruct the on-board unit of the target transport capacity to perform an unloading operation on first semi-trailer transport capacity.

In a specific implementation, the road side unit is further configured to receive the pending-payment information from the first server, and upload, after completing an interaction operation related to payment with the on-board unit, a payment information to the first server 100. If the payment information acquired is completed-payment information, the first server 100 may generate the unloading instruction, and return the unloading instruction to the corresponding on-board unit to instruct the on-board unit to perform the unloading operation on the currently hauled target semi-trailer transport capacity, such that other semi-trailer transport capacity can be re-hauled at a first location, or the freight transportation tasks of all the semi-trailer transport capacity are completed. When the target tractor is provided with an on-board unit, and the target semi-trailer is not provided with an on-board unit, the unloading instruction described above is only returned to the on-board unit on the target tractor; when the target tractor and the target semi-trailer are both provided with on-board units, the unloading instructions described above can be returned to the on-board units of the target tractor and the target semi-trailer simultaneously.

In one embodiment, the method for automatic driving transportation described above further comprises: in response to the station arrival information of the on-board unit, determining a station type contained in the station arrival information; in response to no abnormality being present in the result of the transport capacity information verification and the station type being not an end station, generating a loading instruction; and sending the loading instruction to the on-board unit, wherein the loading instruction is used for instructing the on-board unit to perform a loading operation on second semi-trailer transport capacity.

In a specific implementation, after completing one unloading operation, in response to the station arrival information of the on-board unit of the target tractor being not an end station and no abnormality being present in the result of the transport capacity information verification, the first server 100 generates the loading instruction and sends the loading instruction to the on-board unit, so as to instruct the on-board unit to perform the loading operation on the second semi-trailer transport capacity. The second semi-trailer transport capacity is queued behind the first semi-trailer transport capacity in the currently executed freight sub-order, and is used for continuously executing the freight transportation task of the freight sub-order.

In the method for automatic driving transportation in the above embodiments, by receiving the target route sent by the third server, the first server performs the first risk assessment according to the target route, sends the result of the first risk assessment to the third server, and thus instructs, when the result of the first risk assessment is passing, target transport capacity meeting demands of the freight sub-order to execute the transportation task according to the target route passing the assessment. Meanwhile, a diversified task taking-over policy is further provided, which better avoids and copes with the abnormalities and reduces the probability of accidents; the addition of information verification mechanism can better guarantee the reliability and authenticity of information between the servers and units, and thus effectively improve the transportation efficiency.

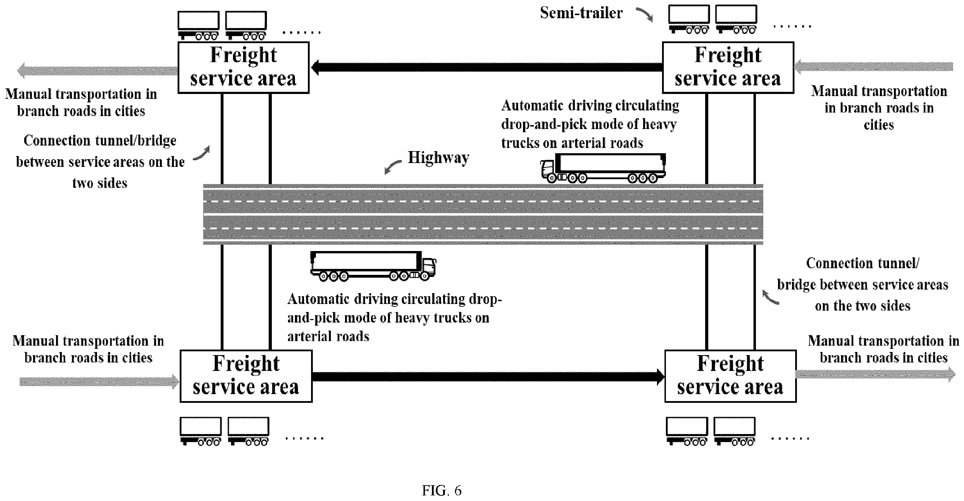

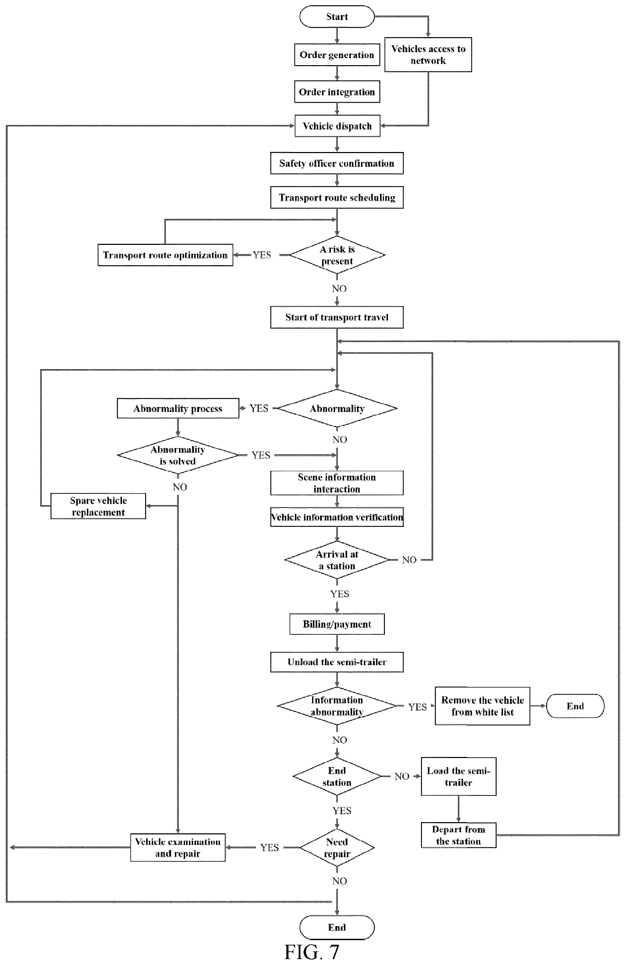

In order to facilitate a thorough understanding of the embodiments of the present application by those skilled in the art, at least one specific example will be described below in conjunction with FIGs. 6-14. Firstly, FIG. 6 illustrates an application scene of the method for automatic driving transportation according to the embodiments of the present application. FIG. 7 illustrates a schematic overall flow of the method for automatic driving transportation according to the embodiments of the present application.

Referring to FIG. 6, the method for automatic driving transportation proposed herein is practically applicable to a circulating drop-and-pick transportation mode of automatic driving arterial logistics. The arterial transportation tasks are borne by automatic driving heavy trucks; connection between two sides of a highway is achieved through a connection tunnel or a bridge in a freight transportation service area, and local transportation tasks are borne by human drivers. The present application provides a method for automatic driving transportation mainly directing to the problems of a complicated driving environment in a city, the long tail effect caused by a difference in driving environments of different areas, difficulty in realizing commercialization, and the like.

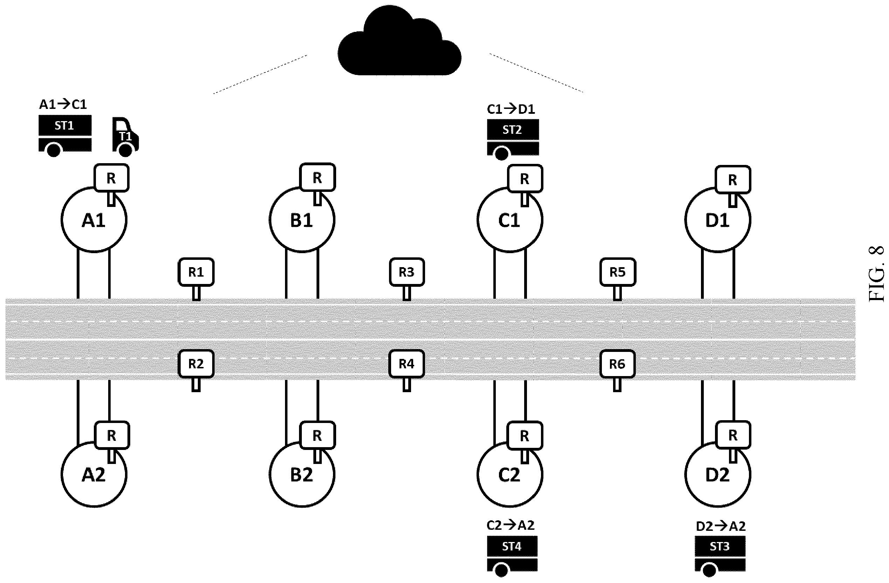

Referring to FIG. 7, in one embodiment, as shown in FIG. 8, there are 8 transportation stations on the two sides of a road: A1, B1, C1, D1, A2, B2, C2 and D2. Each transportation station is equipped with not less than one road side unit with a toll function. In this embodiment, "R" of each station represents the road side units with the toll function, which, however, does not imply that each station only have one road side unit with the toll function. The stations on the two sides at one location are connected by the connection tunnel or the bridge. For example, A1 and A2 are connected through a tunnel; an automatic driving tractor T1 is parked at station A1, and is equipped with an on-board unit T1_OBU with wireless communication function; and four semi-trailers ST1, ST2, ST3 and ST4 waiting for transportation are respectively parked at stations A1, C1, C2 and D2. The above tractor and semi-trailers have completed the request for accessing a network and are included in the white list of transport capacity.

It can be seen that not less than one combination of road side unit and edge computing unit is arranged on each side of the roads between the stations, i.e., R1, R2, R3, R4, R5 and R6. R1 represents a sum of road side systems between A1 and B1, and the number of devices in actual applications can be determined according to conditions of road facilities in actual scenes. All the devices are collectively referred to as R1. Similarly, the road side systems between other stations are collectively referred to as inter-station road side systems, which, however, does not imply that there is only one set of road side system here. Thus, the following freight sub-orders are contained: ST1: A1→C1; ST2: C1→D1; ST3: D2→A2; ST4: C2→A2. The automatic driving transportation tasks can be completed specifically according to the following steps.

Step 1, the second server sends the 4 orders to the third server.

Step 2, the third server makes a plan where tractor T1 receives the three freight sub-orders ST1, ST2 and ST3 and transport ST1 to station C1; after ST1 is unloaded, ST2 is loaded and transported to station D1; after ST2 is unloaded, T1 travels to station D2 via the connection tunnel, and ST3 is loaded and transported to station A2.

Step 3, the third server uploads the transportation route to the first server for risk assessment.

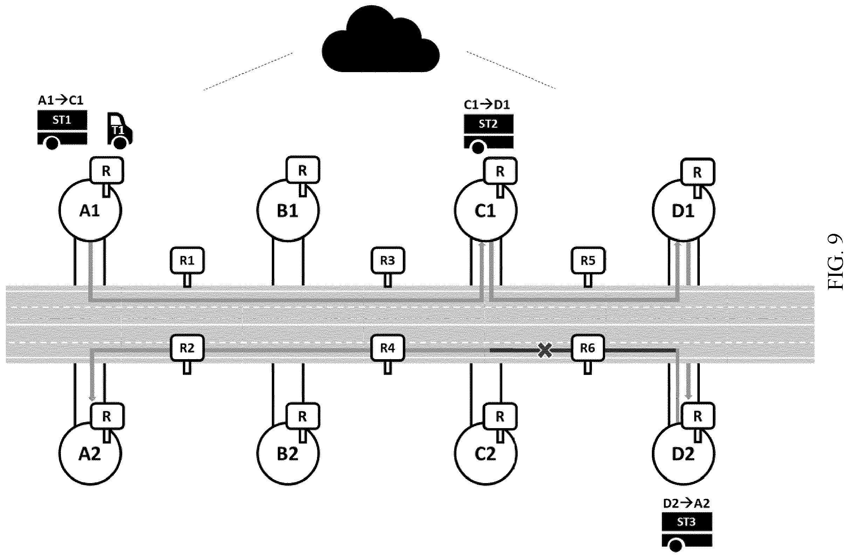

Step 4, the first server predicts, in combination with an event fusion analysis result, that there is a high probability of debris flow landslide within an estimated period of time when T1 arrives at a certain location between station D2 and station C2, such that this route is not recommended, e.g., the risk pre-warning identifier shown in FIG. 9.

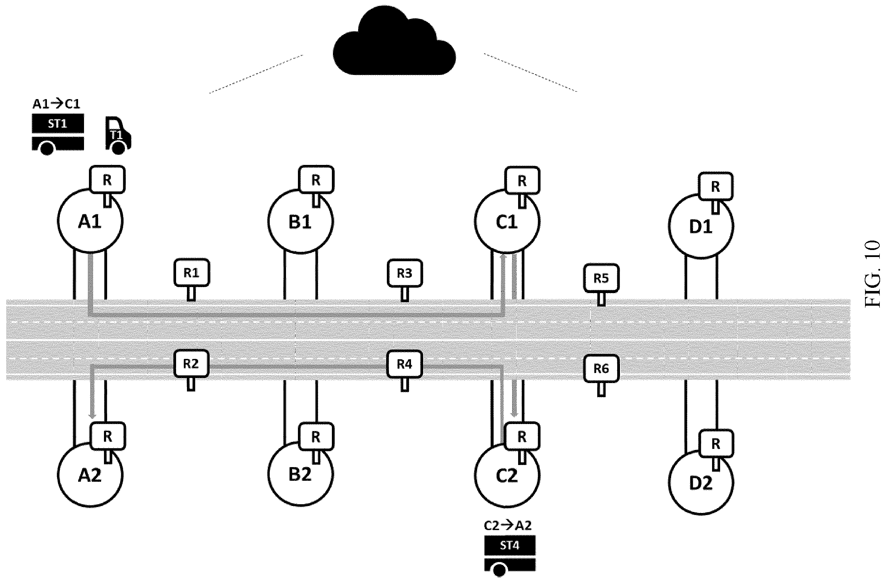

Step 5, after receiving the route assessment result, the third server determines, in consideration that debris flow landslide is a serious dangerous event, to change the route to the following: ST1 is transported from station A1 station C1; after ST1 is unloaded, T1 travels to station C2 via the connection tunnel, and ST4 is loaded and transported to station A2, as shown in FIG. 10.

Step 6, the third server issues a freight transportation task to T1; T1 departs from station A1, and reports a vehicle information, a departure station information, freight transportation information and the like to the first server at the time of departure; A1_R performs the information verification.

Step 7, T1 performs information interaction with R1 and the first server through on-board unit T1_OBU, and reports vehicle information that there is no abnormality on the vehicle and R1 does not find an abnormal traffic condition.

Step 8, the first server randomly sends an instruction of transport capacity information verification; R1 uploads the T1-related vehicle information received by the road side unit, and a sensed T1-related information fused by the edge computing unit; the first server compares the information and finds no information abnormality.

Step 9, when arriving at station C1, T1 reports the station arrival information and freight transportation information to the first server and the third server; the first server calculates a fee according to the information, and pushes a billing result to C1_R; C1_R completes identity verification and payment through interaction with T1_OBU, and reports a payment result to the first server.

Step 10, after ST1 is unloaded from T1, the second server confirms the receipt; T1 departs from station C1 and reports the departure information; T1 travels to station C2 via the connection tunnel and reports the arrival information, and then ST4 is loaded; the second server confirms the delivery; T1 departs from station C2 and reports the departure information.

Step 11, T1 performs information interaction with R4 and the first server through on-board unit T1_OBU and reports the information; T1 reports an abnormality to the first server after the abnormality occurs on the vehicle; the first server further reports the abnormality to the fourth server; the fourth server sends path guide information to R4 in combination with the road side information from the road side system; R4 sends the path guide information to the T1_OBU.

Step 12, T1 follows the path guide information and the abnormality was resolved.

Step 13, the first server randomly sends an instruction of transport capacity information verification; R4 and R2 uploads the T1-related information received by the road side unit, and a sensed T1-related information fused by the edge computing unit; the first server compares the information and finds no information abnormality.

Step 14, when arriving at station A2, T1 reports the station arrival information and freight transportation information to the first server and the third server; the first server calculates a fee according to the information, and pushes a billing result to A2_R; A2_R completes identity verification and payment through interaction with T1_OBU, and reports a payment result to the first server.

Step 15, T1 reports the vehicle self-inspection information to the third server, and the third server assesses whether T1 needs examination and repair in combination with the vehicle self-inspection information and the driving mileage and load of T1.

Step 16, according to the assessment result in step 15 that T1 is in good condition and does not need repair, T1 enters a task receiving state.

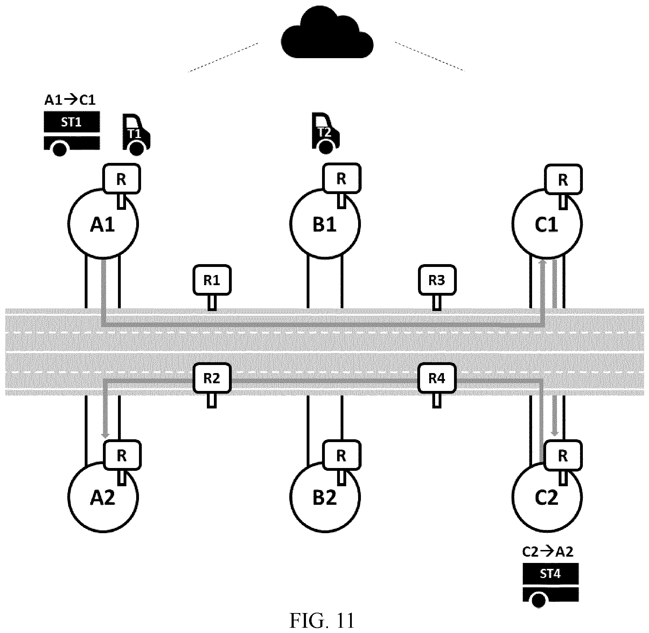

Referring to FIG. 7, in another embodiment, as shown in FIG. 11, there are 6 transportation stations on the two sides of a road: A1, B1, C1, A2, B2 and C2. In this embodiment, transportation stations can be built on both sides, or transportation stations can be built only on one side. Each transportation station is equipped with not less than one road side unit with the toll function. In this embodiment, R of each station represents the road side units with the toll function, which, however, does not imply that each station only have one road side unit with the toll function. The stations on the two sides at one location are connected by a connection tunnel or a bridge. For example, A1 and A2 are connected through the connection tunnel; an automatic driving tractor T1 is parked at station A1, and another automatic driving tractor T2 is parked at station B1; each of the tractors is equipped with an on-board unit T1_OBU with wireless communication function; two semi-trailers ST1 and ST4 are respectively parked at stations A1 and B2 for waiting for transportation. The above tractors and semi-trailers have completed the request for accessing a network and are included in the white list of transport capacity.

It can be seen that not less than one combination of road side unit and edge computing unit is arranged on each side of the highway between the stations, i.e., R1, R2, R3 and R4. R1 represents a sum of road side systems between A1 and B1, and the number of devices in actual applications can be determined according to conditions of road facilities in actual scenes. All the devices are collectively referred to as R1. Similarly, the road side systems between other stations are collectively referred to as inter-station road side systems, which, however, does not imply that there is only one set of road side system here.

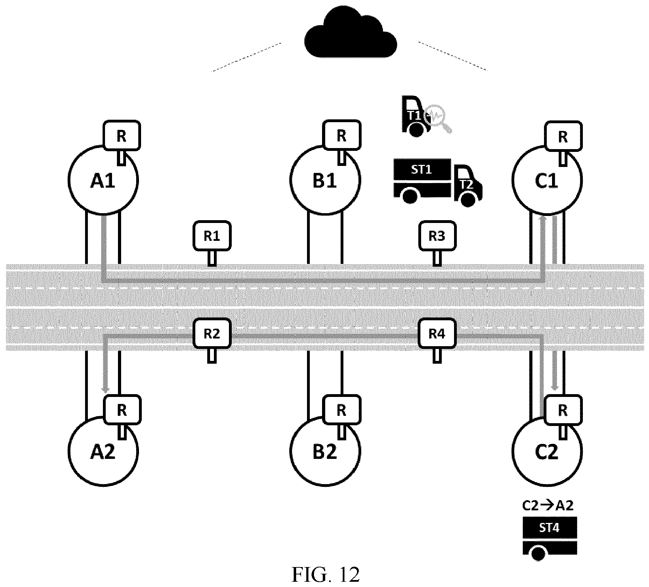

Thus, the following freight sub-orders are contained: ST1: A1→C1; ST4: C2→A2. The automatic driving transportation task can be completed specifically according to the following steps:
Step 1, the second server sends the 2 orders to the third server.
Step 2, the third server makes a plan where tractor T1 receives orders ST1 and ST4 to transport ST1 to station C1; after ST1 is unloaded, T1 travels to station C2 via the connection tunnel; ST4 is loaded and transported to station A2 where ST4 is unloaded.
Step 3, the third server uploads the transportation route to the first server for risk assessment.
Step 4, the first server estimates that this route has low risk in combination with an event fusion analysis result.
Step 5, the third server confirms the transportation task to be completed according to this route after receiving the route assessment result, and issues a freight transportation task to T1; T1 departs from station A1, and reports a vehicle information, departure station information, freight transportation information and the like to the first server at the time of departure; A1_R performs the information verification.
Step 6, T1 performs information interaction with R1 and the first server through the intelligent on-board unit T1_OBU, and reports vehicle information that there is no abnormality on the vehicle and R1 does not find an abnormal traffic condition.
Step 7, the first server randomly sends an instruction of transport capacity information verification; R1 uploads the T1-related information received by the road side unit, and a sensed T1-related information fused by the edge computing unit; the first server compares the information and finds no information abnormality.
Step 8, T1 performs information interaction with R3 and the first server through the on-board unit T1_OBU, and reports vehicle information that there is an abnormality on the vehicle. The vehicle reports the abnormality to the first server; the platform further reports the abnormality to the fourth server; the fourth server sends path guide information to R3 in combination with the road side information from the road side system; R3 sends the path guide information to the T1_OBU.
Step 9, T1 follows the path guide information, but the abnormality is not resolved; T1 is parked in the emergency lane, and sends a maintenance and rescue request and a spare vehicle request to the first server and the third server.
Step 10, the third server dispatches T2 parked at station B1 to replace T1 to complete the transportation task, dispatches a maintenance and rescue team for rescue; ST1 is unloaded and T1 enters an examination and repair mode, as shown in FIG. 12.
Step 11, ST1 is loaded to T2 which takes over the transportation task of T1 and the tractor information is updated in the first server.
Step 12, when arriving at station C1, T2 reports the station arrival information and freight transportation information to the first server and the third server; the first server calculates a fee according to the information, and pushes a billing result to C1_R; C1_R completes identity verification and payment through interaction with T2_OBU, and reports a payment result to the logistics information interaction platform.
Step 13, after ST1 is unloaded from T2, the second server confirms the receipt; T2 departs from station C1 and reports the departure information; T2 travels to station C2 via the connection tunnel and reports the arrival information, and then ST4 is loaded; the second server confirms the delivery; T2 departs from station C2 and reports the departure information.
Step 14, T2 performs information interaction with R4, R2 and the first server through on-board unit T2_OBU, and reports vehicle information that there is no abnormality on the vehicle and R4 and R2 do not find an abnormal traffic condition.
Step 15, the first server randomly sends an instruction of transport capacity information verification; R4 and R2 uploads the T2-related information received by the road side unit, and a sensed T2-related information fused by the edge computing unit; the first server compares the information and finds no information abnormality.
Step 16, when arriving at station A2, T2 reports the station arrival information and freight transportation information to the first server and the third server; the first server calculates a fee according to the information, and pushes a billing result to A2_R; A2_R completes identity verification and payment through interaction with T2_OBU, and reports a payment result to the first server.
Step 17, T2 reports the vehicle self-inspection information to the third server, and the third server assesses whether T2 needs examination and repair in combination with the vehicle self-inspection information and the driving mileage and load of T2.
Step 18, according to the assessment result in step 17 that T2 is in good condition and does not need repair, T2 enters a task receiving state.

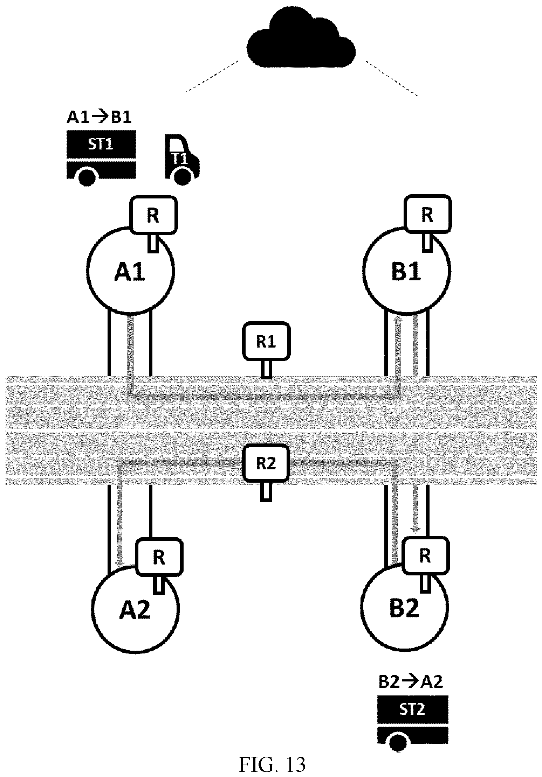

Referring to FIG. 7, in yet another embodiment, as shown in FIG. 13, there are 4 transportation stations on the two sides of a road: A1, B1, A2 and B2. In this embodiment, transportation stations can be built on both sides, or transportation stations can be built only on one side. Each transportation station is equipped with not less than one on-board unit with the toll function. In this embodiment, R of each station represents the road side units with the toll function, which, however, does not imply that each station only have one road side unit with the toll function. The stations on the two sides at one location are connected by a connection tunnel or a bridge. For example, A1 and A2 are connected through the connection tunnel. An automatic driving tractor T1 is parked at station A1, and is equipped with an on-board unit T1_OBU with wireless communication function; two semi-trailers ST1 and ST2 are respectively parked at stations A1 and B2 for waiting for transportation. The above tractor and semi-trailers have completed the request for accessing a network and are included in the white list of transport capacity.

It can be seen that not less than one combination of road side unit and edge computing unit is arranged on each side of the highway between the stations, i.e., R1 and R2. R1 represents a sum of road side systems between A1 and B1, and the number of devices in actual applications can be determined according to conditions of road facilities in actual scenes. All the devices are collectively referred to as R1. Similarly, the road side systems between other stations are collectively referred to as inter-station road side systems, which, however, does not imply that there is only one set of road side system here.

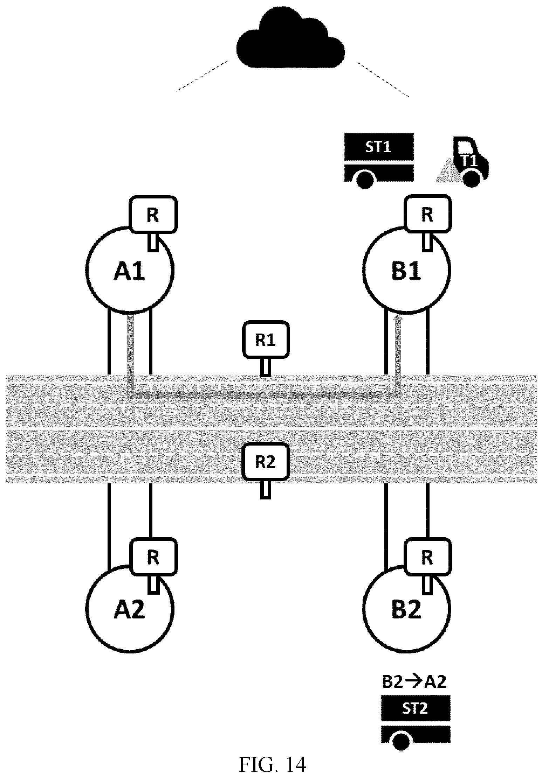

Thus, the following freight sub-orders are contained: ST1: A1→B1; ST2: B2→A2. The automatic driving transportation task can be completed specifically according to the following steps:
Step 1, the second server sends the 2 orders to the third server.
Step 2, the third server makes a plan where tractor T1 receives orders ST1 and ST2 to transport ST1 to station B1; after ST1 is unloaded, T1 travels to station B2 via the connection tunnel; ST2 is loaded and transported to station A1 where ST2 is unloaded.
Step 3, the third server uploads the transportation route to the first server for risk assessment.
Step 4, the first server estimates that this route has low risk in combination with an event fusion analysis result.
Step 5, the third server confirms the transportation task to be completed according to this route after receiving the route assessment result, and issues a freight transportation task to T1; T1 departs from station A1, and reports a vehicle information, departure station information, freight transportation information and the like to the first server at the time of departure; A1_R performs the information verification.
Step 6, T1 performs information interaction with R1 and the first server through the on-board unit T1_OBU, and reports vehicle information that there is no abnormality on the vehicle and R1 does not find an abnormal traffic condition.
Step 7, the first server randomly sends an instruction of transport capacity information verification; R1 uploads the T1-related information received by the road side unit, and a sensed T1-related information fused by the edge computing unit; the first server compares the information and finds an abnormality in the vehicle identity information of T1.
Step 8, when arriving at station C1, T1 reports the station arrival information and freight transportation information to the first server and the third server; the first server calculates a fee according to the confirmed departure information of T1 at the previous station and information at this station, and sends a billing result to C1_R; C1_R completes payment through interaction with T1_OBU, marks the vehicle identity information abnormality in the payment record of T1, and reports a payment result to the first server.
Step 9, ST1 is unloaded from T1, and the second server confirms the receipt.
Step 10, due to the vehicle identity information abnormality found in step 7, T1 is removed from the white list of transport capacity and cannot continue to execute the transportation task.
Step 11, order ST2: B2→A2 is returned to a freight transportation demand pool, and other tractors on the white list of transport capacity will continue to complete the transportation task, as shown in FIG. 14.

It should be understood that although the steps in the flow diagrams of FIGs. 3, 5 and 7 are shown in the order as indicated by the arrows, these steps are not necessarily performed in the order as indicated by the arrows. These steps are not strictly limited to a certain order and may be performed in other orders, unless explicitly stated herein. Moreover, at least some of the steps in FIGs. 3, 5 and 7 may comprises a plurality of sub-steps or a plurality of stages. Such sub-steps or stages are not necessarily performed at the same time, but may be performed at different times, and such sub-steps or stages are not necessarily performed in a sequential order, but may be performed in turn or alternately with other steps or at least some of the sub-steps or stages of other steps.

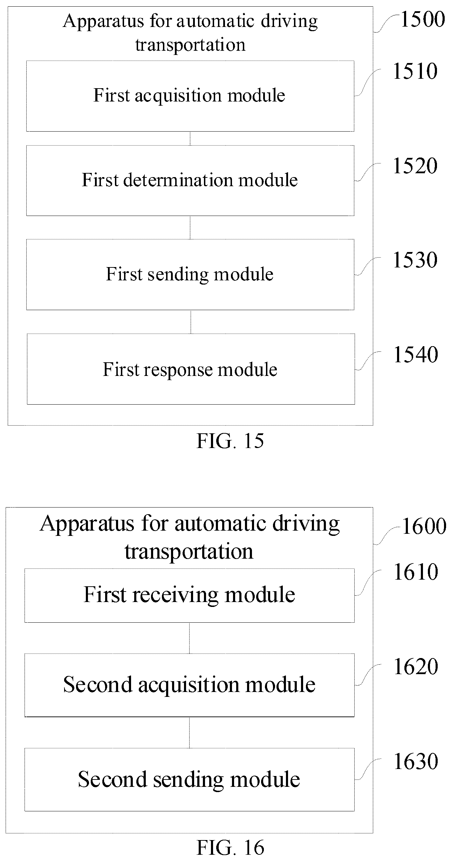

In order to better implement the method for automatic driving transportation provided in the embodiments of the present application, on the basis of the method, an apparatus for automatic driving transportation is further provided in embodiments of the present application. As shown in FIG. 15, the apparatus for automatic driving transportation 1500 comprises:
a first acquisition module 1510 configured for acquiring a freight sub-order;
a first determining module 1520 configured for determining target transport capacity and a target route which meet demands of the freight sub-order;
a first sending module 1530 configured for sending the target route to a first server such that the first server returns a result of a first risk assessment of the target route; and
a first response module 1540 configured for, in response to the result of the first risk assessment being a first assessment result, instructing the target transport capacity to execute the transportation task according to the target route.

In some embodiments of the present application, the apparatus for automatic driving transportation 1500 further comprises a second response module configured for: in response to the result of the first risk assessment being a second assessment result, updating the target route to obtain an updated target route; acquiring a result of a second risk assessment of the updated target route; and in response to the result of the second risk assessment being the first assessment result, instructing the target transport capacity to execute the transportation task according to the updated target route.

In some embodiments of the present application, the first response module 1540 is further configured for: in response to the result of the first risk assessment being the first assessment result, generating a transportation instruction containing freight transportation information; and sending the transportation instruction to a first on-board unit to instruct the target transport capacity to execute the transportation task according to the target route, wherein the first on-board unit is arranged in the target transport capacity.

In some embodiments of the present application, the apparatus for automatic driving transportation 1500 further comprises a third response module configured for: in response to the result of the second risk assessment being the first assessment result, generating a transportation instruction containing freight transportation information; and sending the transportation instruction to a first on-board unit to instruct the target transport capacity to execute the transportation task according to the updated target route, wherein the first on-board unit is arranged in the target transport capacity.

In some embodiments of the present application, the apparatus for automatic driving transportation 1500 further comprises transport capacity replacement module configured for: in response to a request for spare transport capacity of the first on-board unit, selecting spare transport capacity for replacing the target transport capacity from a white list of transport capacity, wherein the white list of transport capacity contains all identity-verified transport capacity; and sending the transportation instruction to a second on-board unit to instruct the spare transport capacity to execute the transportation task according to the target route or the updated target route, wherein the second on-board unit is arranged in the spare transport capacity.

In some embodiments of the present application, the apparatus for automatic driving transportation 1500 further comprises a list processing module configured for: in response to station arrival information of the first on-board unit or the second on-board unit, determining a station type contained in the station arrival information; in response to the station type being an end station, acquiring transport capacity self-inspection information, mileage information and load information; and processing the white list of transport capacity according to the transport capacity self-inspection information, the mileage information and the load information.

In some embodiments of the present application, the list processing module is further configured for: acquiring a maintenance assessment result of transport capacity currently executing the transportation task according to the transport capacity self-inspection information, the mileage information and the load information; in response to the maintenance assessment result being a first maintenance result, eliminating transport capacity identity information of the transport capacity in the white list of transport capacity; and in response to the maintenance assessment result being a second maintenance result, retaining the transport capacity identity information of the transport capacity in the white list of transport capacity.

In some embodiments of the present application, the first acquisition module 1510 is further configured for receiving a freight demand order sent by a second server; and processing the freight demand order based on a preset transportation policy to obtain the freight sub-order.

In the above embodiments, the third server acquires a freight sub-order, determines target transport capacity and a target route meeting demands of the freight sub-order, so as to send the target route to a first server, such that the first server returns a result of a first risk assessment of the target route, and in response to the result of the first risk assessment being a first assessment result, instructs the target transport capacity to execute the transportation task according to the target route. In this way, the transportation task is executed in a multi-site transportation mode, and the risk assessment is performed before the transportation task is started, thus effectively ensuring the flexibility of transport capacity and time of transportation, reduce unloading rate of transport capacity, save human and material resources, and improve the transportation efficiency and the safety.

In order to better implement the method for automatic driving transportation provided in the embodiments of the present application, on the basis of the method, another apparatus for automatic driving transportation is further provided in embodiments of the present application. As shown in FIG. 16, the apparatus for automatic driving transportation 1600 comprises:
a first receiving module 1610 configured for receiving a target route sent by a third server, wherein the target route is a target route meeting demands of a freight sub-order;
a second acquisition module 1620 configured for performing first risk assessment according to the target route; and
a second sending module 1630 configured for sending a result of the first risk assessment to the third server, wherein the result of the first risk assessment comprises a first assessment result, and the first assessment result is used for prompting the third server to instruct target transport capacity meeting demands of the freight sub-order to execute the transportation task according to the target route passing the assessment.

In some embodiments of the present application, the second acquisition module 1620 is further configured for determining a fourth server according to a passing area corresponding to the target route; acquiring an event analysis result in the passing area through the fourth server; and obtaining the result of the first risk assessment according to the event analysis result.

In some embodiments of the present application, the result of the first risk assessment further comprises a second assessment result, and the apparatus for automatic driving transportation 1600 further comprises a secondary assessment module configured for: receiving an updated target route sent by the third server, wherein the updated target route is obtained by the third server updating the target route in response to the second assessment result; performing a second risk assessment according to the updated target route to obtain a result of the second risk assessment; and sending the result of the second risk assessment to the third server.

In some embodiments of the present application, the apparatus for automatic driving transportation 1600 further comprises an abnormality processing module configured for: in response to abnormality information of an on-board unit of the target transport capacity, sending the abnormality information to the fourth server, wherein the abnormality information is used for prompting the fourth server to instruct an edge computing unit to analyze and acquire a path guide information and/or a passing control information and return the path guide information and/or the passing control information to the on-board unit through a road side unit; the abnormality information comprises at least one of software/hardware abnormality information, map abnormality information, sensing abnormality information, planning abnormality information and driving scene abnormality information; the path guide information and/or the passing control information are used for the target transport capacity adjusting the abnormality.

In some embodiments of the present application, the apparatus for automatic driving transportation 1600 further comprises a map updating module configured for: in response to the result of the first risk assessment being the first assessment result, acquiring driving scene abnormality information currently in use and map information currently in use; acquiring a real-time driving scene information through a fifth server, and acquiring a real-time map information through an on-board unit of the target transport capacity, wherein the real-time driving scene information is determined by the fifth server according to meteorological information and road administration information returned by the fourth server and road side information returned by an edge computing unit; comparing the driving scene information currently in use with the real-time driving scene information to obtain a first result; comparing the map information currently in use with the real-time map information to obtain a second result; and updating the driving scene information currently in use and/or the map information currently in use according to the first result and/or the second result, and respectively uploading the updated driving scene information and/or the updated map information to the fourth server and/or the on-board unit.

In some embodiments of the present application, the apparatus for automatic driving transportation 1600 further comprises a result response module configured for: in response to the result of the first risk assessment being the first assessment result, acquiring an instruction of transport capacity information verification, wherein the instruction of transport capacity information verification comprises at least one of an instruction of identity information verification, an instruction of position information verification, an instruction of motion information verification and an instruction of driving state information verification; sending the instruction of transport capacity information verification to a target road side unit, so as to perform transport capacity information verification according to information to be verified returned by the target road side unit, to obtain a result of the transport capacity information verification; and maintaining a white list of transport capacity according to the result of the transport capacity information verification, wherein the white list of transport capacity contains all identity-verified transport capacity.

In some embodiments of the present application, the apparatus for automatic driving transportation 1600 further comprises a payment information sending module configured for: in response to station arrival information and freight transportation information of an on-board unit, acquiring pending-payment information according to the freight transportation information; sending the pending-payment information to the on-board unit through the target road side unit; and in response to completed-payment information returned by the on-board unit of the target transport capacity, generating and returning an unloading instruction to instruct the on-board unit to perform an unloading operation on first semi-trailer transport capacity.

In some embodiments of the present application, the apparatus for automatic driving transportation 1600 further comprises a loading instruction sending module configured for: in response to the station arrival information of the on-board unit, determining a station type contained in the station arrival information; in response to no abnormality being present in the result of the transport capacity information verification and the station type being not an end station, generating a loading instruction; and sending the loading instruction to the on-board unit, wherein the loading instruction is used for instructing the on-board unit to perform a loading operation on second semi-trailer transport capacity.

In the above embodiments, by receiving the target route sent by the third server, the first server performs the first risk assessment according to the target route, sends the result of the first risk assessment to the third server, and thus instructs, when the result of the first risk assessment is passing, target transport capacity meeting demands of the freight sub-order to execute the transportation task according to the target route passing the assessment. Meanwhile, a diversified task taking-over policy is further provided, which better avoids and copes with the abnormalities and reduces the probability of accidents; the addition of information verification mechanism better guarantees the reliability and authenticity of information between the servers and units, and thus effectively improves the transportation efficiency.

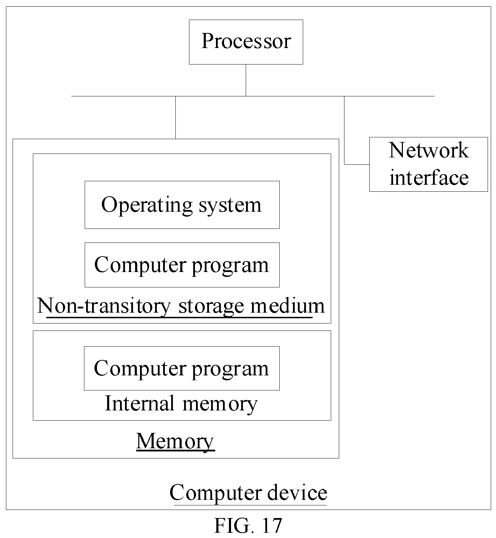

In some embodiments of the present application, the apparatus for automatic driving transportation 1500 and the apparatus for automatic driving transportation 1600 may be implemented in the form of a computer program that may operate on a computer device as shown in FIG. 17. A memory of the computer device can store various program modules that constitute the apparatus for automatic driving transportation 1500 and the apparatus for automatic driving transportation 1600, for example, the first acquisition module 1510, the first determination module 1520, the first sending module 1530, and the first response module 1540 shown in FIG. 15; for another example, the first receiving module 1610, the second acquisition module 1620 and the second sending module 1630 shown in FIG. 16. Computer programs for the program modules cause a processor to execute the steps in the method for automatic driving transportation of the embodiments of the present application described in this specification.

For example, the computer device shown in FIG. 17 may execute step S301 through the first acquisition module 1510 in the apparatus for automatic driving transportation 1500 shown in FIG. 15. The computer device may execute step S302 through the first determination module 1520. The computer device may execute step S303 through the first sending module 1530. The computer device may execute step S304 through the first response module 1540. For another example, the computer device shown in FIG. 16 may execute step S501 through the first receiving module 1610 in the apparatus for automatic driving transportation 1600 shown in FIG. 16. The computer device may execute step S502 through the second acquisition module 1620. The computer device may execute step S503 through the second sending module 1630.

The computer device comprises a processor, a memory, and a network interface connected by a system bus. The processor of the computer device is configured for providing computing and control capabilities. The memory of the computer device comprises a non-transitory storage medium and an internal memory. The non-transitory storage medium stores an operating system and a computer program. The internal memory provides the circumstance for operation of the operating system and the computer program in the non-transitory storage medium. The network interface of the computer device is configured for communicating with an external computer device through network connection. The computer program, when executed by a processor, implements the method for automatic driving transportation.

It will be appreciated by those skilled in the art that the structure shown in FIG. 17 is only a block diagram of some structures associated with the scheme of the present application, and is not intended to limit the scheme of the present application to the computer device; and a particular computer device may comprises more or fewer components than shown, or may be combined with certain components, or have a different arrangement of components.

In some embodiments of the present application, a computer device is provided, comprising one or more processors; a memory; and one or more application programs, wherein the one or more application programs are stored in the memory and configured to cause the processor to execute the steps of the method for automatic driving transportation described above. The steps of the method for automatic driving transportation here can be the steps in the method for automatic driving transportation in the above embodiments.

In some embodiments of the present application, provided is a computer-readable storage medium having a computer program stored thereon, wherein the computer program is loaded by a processor, causing the processor to implement the steps of the method for automatic driving transportation. The steps of the method for automatic driving transportation here can be the steps in the method for automatic driving transportation in the above embodiments.

It will be understood by those of ordinary skill in the art that all or a part of the procedures of the methods in the embodiments described above may be implemented by a computer program instructing relevant hardware. The computer program may be stored in a non-transitory computer-readable storage medium; and the computer program, when executed, may comprise the procedures in the embodiments of the methods described above. Any reference to the memory, storage, database or other media used in the various embodiments provided herein can include at least one of non-transitory and volatile memories. The non-transitory memory may include a read-only memory (ROM), a magnetic tape, a floppy disk, a flash memory, an optical memory, or the like. The volatile memory may include a random access memory (RAM) or an external cache memory. As an illustration, not a limitation, the RAM may be in various forms, such as a static random access memory (SRAM) or a dynamic random access memory (DRAM).

All the technical features of the above embodiments can be combined randomly. For the sake of brevity, all possible combinations of the technical features in the above embodiments are not described. However, these technical features shall all be considered as within the scope of the specification as long as there is no contradiction in their combinations.

The method and apparatus for automatic driving transportation, the transportation system and the storage medium provided by the embodiments of the present application have been described in detail above. Specific examples are used herein to illustrate the principles and implementations of the present invention. The description of the above embodiments is merely to help understand the method of the present invention; also, changes to all specific implementations and application ranges can be made by those skilled in the art. In summary, the content of the specification shall not be construed as a limitation to the present invention.

### EXAMPLE CLAUSES

Embodiments of the disclosure can be described in view of the following clauses:
1. A method for automatic driving transportation, comprising:
   acquiring a freight sub-order;
   determining target transport capacity and a target route meeting demands of the freight sub-order;
   sending the target route to a first server;
   receiving a result of a first risk assessment of the target route from the first server; and
   instructing, in response to the result of the first risk assessment being a first assessment result, the target transport capacity to execute transportation task according to the target route.
2. The method according to clause 1, further comprising:
   updating, in response to the result of the first risk assessment being a second assessment result, the target route to obtain an updated target route;
   acquiring a result of a second risk assessment of the updated target route; and
   instructing, in response to the result of the second risk assessment being the first assessment result, the target transport capacity to execute the transportation task according to the updated target route.
3. The method according to clause 1 or 2, wherein instructing, in response to the result of the first risk assessment being the first assessment result, the target transport capacity to execute the transportation task according to the target route comprises:
   generating, in response to the result of the first risk assessment being the first assessment result, a transportation instruction containing freight transportation information; and
   sending the transportation instruction to a first on-board unit to instruct the target transport capacity to execute the transportation task according to the target route;
   wherein the first on-board unit is arranged in the target transport capacity.
4. The method according to clause 2, wherein instructing, in response to the result of the second risk assessment being the first assessment result, the target transport capacity to execute the transportation task according to the updated target route comprises:
   generating, in response to the result of the second risk assessment being the first assessment result, a transportation instruction containing freight transportation information; and
   sending the transportation instruction to a first on-board unit to instruct the target transport capacity to execute the transportation task according to the updated target route;
   wherein the first on-board unit is arranged in the target transport capacity.
5. The method according to clause 3, further comprising:
   selecting, in response to receiving a request for spare transport capacity from the first on-board unit, spare transport capacity for replacing the target transport capacity from a white list of transport capacity, wherein the white list of transport capacity contains information of all identity-verified transport capacity; and
   sending the transportation instruction to a second on-board unit to instruct the spare transport capacity to execute the transportation task according to the target route or the updated target route;
   wherein the second on-board unit is arranged in the spare transport capacity.
6. The method according to clause 5, further comprising:
   determining, in response to receiving station arrival information from the first on-board unit or the second on-board unit, a station type contained in the station arrival information;
   acquiring, in response to the station type being an end station, transport capacity self-inspection information, mileage information and load information; and
   processing the white list of transport capacity according to the transport capacity self-inspection information, the mileage information and the load information.
7. The method according to clause 6, wherein processing the white list of transport capacity according to the transport capacity self-inspection information, the mileage information and the load information comprises:
   acquiring a maintenance assessment result of transport capacity currently executing the transportation task according to the transport capacity self-inspection information, the mileage information and the load information;
   eliminating, in response to the maintenance assessment result being a first maintenance result, transport capacity identity information of the transport capacity currently executing the transportation task from the white list of transport capacity; and
   retaining, in response to the maintenance assessment result being a second maintenance result, the transport capacity identity information of the transport capacity currently executing the transportation task in the white list of transport capacity.
8. The method according to clause 1, wherein acquiring a freight sub-order comprises:
   receiving a freight demand order from a second server; and
   processing, based on a preset transportation policy, the freight demand order to obtain the freight sub-order.
9. A method for automatic driving transportation, comprising:
   receiving a target route from a third server, wherein the target route meets demands of a freight sub-order;
   performing, according to the target route, a first risk assessment; and
   sending a result of the first risk assessment to the third server;
   wherein the result of the first risk assessment comprises a first assessment result; and
   the first assessment result is used for prompting the third server to instruct target transport capacity meeting demands of the freight sub-order to execute, according to the target route passing the first risk assessment, transportation task.
10. The method according to clause 9, wherein performing, according to the target route, the first risk assessment comprises:
   determining, according to a passing area corresponding to the target route, a fourth server;
   acquiring, through the fourth server, an event analysis result in the passing area; and
   obtaining, according to the event analysis result, the result of the first risk assessment.
11. The method according to clause 9, wherein the result of the first risk assessment further comprises a second assessment result, and the method further comprises:
   receiving, from the third server, an updated target route which is obtained by the third server updating the target route in response to the second assessment result;
   performing, according to the updated target route, a second risk assessment to obtain a result of the second risk assessment; and
   sending the result of the second risk assessment to the third server.
12. The method according to clause 10, further comprising:
   sending, in response to receiving abnormality information from an on-board unit of the target transport capacity, the abnormality information to the fourth server;
   wherein the abnormality information is used for prompting the fourth server to instruct an edge computing unit to acquire path guide information and/or passing control information and send the path guide information and/or the passing control information to the on-board unit through a road side unit;
   the abnormality information comprises at least one type of information as follows: software/hardware abnormality information, map abnormality information, sensing abnormality information, planning abnormality information and driving scene abnormality information; and
   the path guide information and/or the passing control information is used for the target transport capacity adjusting abnormality.
13. The method according to clause 10, further comprising:
   acquiring, in response to the result of the first risk assessment being the first assessment result, driving scene information currently in use and map information currently in use;
   acquiring, through a fifth server, a real-time driving scene information;
   acquiring, through an on-board unit of the target transport capacity, a real-time map information, wherein the real-time driving scene information is determined by the fifth server according to meteorological information and road administration information from the fourth server and road side information from an edge computing unit;
   comparing the driving scene information currently in use with the real-time driving scene information to obtain a first result;
   comparing the map information currently in use with the real-time map information to obtain a second result;
   updating, according to the first result and/or the second result, the driving scene information currently in use and/or the map information currently in use to obtain updated driving scene information and/or the updated map information; and
   uploading the updated driving scene information and/or the updated map information to the fourth server and/or the on-board unit respectively.
14. The method according to clause 10, further comprising:
   acquiring, in response to the result of the first risk assessment being the first assessment result, an instruction of transport capacity information verification;
   sending the instruction of transport capacity information verification to a target road side unit, so that the target road side unit performs, according to information to be verified from the target road side unit, transport capacity information verification to obtain a result of the transport capacity information verification; and
   maintaining a white list of transport capacity according to the result of the transport capacity information verification;
   wherein the instruction of transport capacity information verification comprises at least one instruction as follows: an instruction of identity information verification, an instruction of position information verification, an instruction of motion information verification and an instruction of driving state information verification; and
   the white list of transport capacity contains information of all identity-verified transport capacity.
15. The method according to clause 14, further comprising:
   acquiring, in response to receiving station arrival information and freight transportation information from an on-board unit, pending-payment information according to the freight transportation information;
   sending, through the target road side unit, the pending-payment information to the on-board unit;
   generating, in response to completed-payment information from the on-board unit of the target transport capacity, an unloading instruction; and
   sending the unloading instruction to instruct the on-board unit to perform an unloading operation on first semi-trailer transport capacity.
16. The method according to clause 15, further comprising:
   determining, in response to receiving the station arrival information from the on-board unit, a station type contained in the station arrival information;
   generating, in response to no abnormality being present in the result of the transport capacity information verification and the station type being not an end station, a loading instruction; and
   sending the loading instruction to the on-board unit;
   wherein the loading instruction is used for instructing the on-board unit to perform a loading operation on second semi-trailer transport capacity.
17. An apparatus for automatic driving transportation, comprising:
   a first acquisition module for acquiring a freight sub-order;
   a first determining module for determining target transport capacity and a target route meeting demands of the freight sub-order;
   a first sending module for sending the target route to a first server, so that the first server sends a result of a first risk assessment of the target route; and
   a first response module for, in response to the result of the first risk assessment being a first assessment result, instructing the target transport capacity to execute the transportation task according to the target route.
18. An apparatus for automatic driving transportation, comprising:
   a first receiving module for receiving a target route from a third server, wherein the target route meets demands of a freight sub-order;
   a second acquisition module for performing a first risk assessment according to the target route; and
   a second sending module for sending a result of the first risk assessment to the third server;
   wherein the result of the first risk assessment comprises a first assessment result which is used for prompting the third server to instruct target transport capacity meeting demands of the freight sub-order to execute the transportation task according to the target route passing the assessment.
19. A transportation system, comprising:
   a server, a network connection unit and automatic driving traction capacity, wherein
   the server comprises a first server, a second server and a third server; the network connection unit comprises an on-board unit; the on-board unit is arranged in the automatic driving traction capacity;
   the first server is in communicative connection with the second server and the third server respectively;
   the second server is in communicative connection with the third server;
   the on-board unit is in communicative connection with the first server and the third server respectively;
   the third server is for acquiring a freight sub-order through the second server; determining target transport capacity and a target route meeting demands of the freight sub-order; sending the target route to the first server; obtaining a result of a first risk assessment of the target route from the first server; instructing, in response to the result of the first risk assessment being a first assessment result, the target transport capacity to execute the transportation task according to the target route;
   wherein the automatic driving traction capacity comprises the target transport capacity.
20. A computer-readable storage medium having a computer program stored thereon, wherein the computer program is loaded by a processor to implement the steps of the method for automatic driving transportation according to any one of clauses 1 to 16.
21. A computer program product comprising an instruction, wherein the computer program product, when operated on a computer, causes the computer to implement the method for automatic driving transportation according to any one of clauses 1 to 16.

## Claims

1. A method for automatic driving transportation, comprising:
acquiring a freight sub-order;
determining target transport capacity and a target route meeting demands of the freight sub-order;
sending the target route to a first server;
receiving a result of a first risk assessment of the target route from the first server; and
instructing, in response to the result of the first risk assessment being a first assessment result, the target transport capacity to execute transportation task according to the target route.

2. The method according to claim 1, further comprising:
updating, in response to the result of the first risk assessment being a second assessment result, the target route to obtain an updated target route;
acquiring a result of a second risk assessment of the updated target route; and
instructing, in response to the result of the second risk assessment being the first assessment result, the target transport capacity to execute the transportation task according to the updated target route.

3. The method according to claim 1 or 2, wherein instructing, in response to the result of the first risk assessment being the first assessment result, the target transport capacity to execute the transportation task according to the target route comprises:
generating, in response to the result of the first risk assessment being the first assessment result, a transportation instruction containing freight transportation information; and
sending the transportation instruction to a first on-board unit to instruct the target transport capacity to execute the transportation task according to the target route;
wherein the first on-board unit is arranged in the target transport capacity.

4. The method according to claim 2, wherein instructing, in response to the result of the second risk assessment being the first assessment result, the target transport capacity to execute the transportation task according to the updated target route comprises:
generating, in response to the result of the second risk assessment being the first assessment result, a transportation instruction containing freight transportation information; and
sending the transportation instruction to a first on-board unit to instruct the target transport capacity to execute the transportation task according to the updated target route;
wherein the first on-board unit is arranged in the target transport capacity.

5. The method according to claim 3, further comprising:
selecting, in response to receiving a request for spare transport capacity from the first on-board unit, spare transport capacity for replacing the target transport capacity from identity-verified transport capacity in a white list of transport capacity; and
sending the transportation instruction to a second on-board unit to instruct the spare transport capacity to execute the transportation task according to the target route or the updated target route;
wherein the second on-board unit is arranged in the spare transport capacity.

6. The method according to claim 5, further comprising:
determining a station type according to station arrival information from the first on-board unit or the second on-board unit;
acquiring, in response to the station type being an end station, transport capacity self-inspection information, mileage information and load information; and
processing the white list of transport capacity according to the transport capacity self-inspection information, the mileage information and the load information.

7. The method according to claim 6, wherein processing the white list of transport capacity according to the transport capacity self-inspection information, the mileage information and the load information comprises:
acquiring a maintenance assessment result of transport capacity currently executing the transportation task according to the transport capacity self-inspection information, the mileage information and the load information;
eliminating, in response to the maintenance assessment result being a first maintenance result, transport capacity identity information of the transport capacity currently executing the transportation task from the white list of transport capacity; and
retaining, in response to the maintenance assessment result being a second maintenance result, the transport capacity identity information of the transport capacity currently executing the transportation task in the white list of transport capacity.

8. The method according to claim 1, wherein acquiring a freight sub-order comprises:
receiving a freight demand order from a second server; and
processing, based on a preset transportation policy, the freight demand order to obtain the freight sub-order.

9. A method for automatic driving transportation, comprising:
receiving a target route from a third server, wherein the target route meets demands of a freight sub-order;
performing, according to the target route, a first risk assessment; and
sending a result of the first risk assessment to the third server;
wherein the result of the first risk assessment comprises a first assessment result; and
the first assessment result is used for prompting the third server to instruct target transport capacity meeting demands of the freight sub-order to execute, according to the target route passing the first risk assessment, transportation task.

10. The method according to claim 9, wherein performing, according to the target route, the first risk assessment comprises:
determining, according to a passing area corresponding to the target route, a fourth server;
acquiring, through the fourth server, an event analysis result in the passing area; and
obtaining, according to the event analysis result, the result of the first risk assessment.

11. The method according to claim 9, wherein the result of the first risk assessment further comprises a second assessment result, and the method further comprises:
receiving, from the third server, an updated target route which is obtained by the third server updating the target route in response to the second assessment result;
performing, according to the updated target route, a second risk assessment to obtain a result of the second risk assessment; and
sending the result of the second risk assessment to the third server.

12. The method according to claim 10, further comprising:
sending abnormality information from an on-board unit of the target transport capacity to the fourth server;
wherein the abnormality information is used for prompting the fourth server to instruct an edge computing unit to acquire path guide information or passing control information and send the path guide information or the passing control information to the on-board unit through a road side unit;
the abnormality information comprises at least one type of information as follows: software/hardware abnormality information, map abnormality information, sensing abnormality information, planning abnormality information and driving scene abnormality information; and
the path guide information or the passing control information is used for the target transport capacity adjusting abnormality.

13. The method according to claim 10, further comprising:
acquiring, in response to the result of the first risk assessment being the first assessment result, driving scene information currently in use and map information currently in use;
acquiring, through a fifth server, a real-time driving scene information;
acquiring, through an on-board unit of the target transport capacity, a real-time map information, wherein the real-time driving scene information is determined by the fifth server according to meteorological information and road administration information from the fourth server and road side information from an edge computing unit;
comparing the driving scene information currently in use with the real-time driving scene information to obtain a first result;
comparing the map information currently in use with the real-time map information to obtain a second result;
updating, according to the first result or the second result, the driving scene information currently in use or the map information currently in use to obtain updated driving scene information or the updated map information; and
uploading the updated driving scene information or the updated map information to the fourth server or the on-board unit respectively.

14. A computer-readable storage medium having a computer program stored thereon, wherein the computer program is loaded by a processor to implement the method for automatic driving transportation according to any one of claims 1 to 13.

15. A computer program product comprising an instruction, wherein the computer program product, when operated on a computer, causes the computer to implement the method for automatic driving transportation according to any one of claims 1 to 13.
